Europäisches Patentamt

European Patent Office

Office européen des brevets

(19)

(11) Publication number: **0 121 668**
**B1**

(12) **EUROPEAN PATENT SPECIFICATION**

(45) Date of publication of patent specification: **04.05.88**

(21) Application number: **84101024.2**

(22) Date of filing: **08.03.82**

(60) Publication number of the earlier application in accordance with Art. 76 EPC: **0 073 836**

(51) Int. Cl.⁴: **F 24 J 2/42,** A 01 G 9/24, F 24 D 11/00

(54) **Solar heat accumulating greenhouses.**

(30) Priority: **13.03.81 JP 37145/81 u**

(43) Date of publication of application:
**17.10.84 Bulletin 84/42**

(45) Publication of the grant of the patent:
**04.05.88 Bulletin 88/18**

(84) Designated Contracting States:
**DE FR GB NL SE**

(56) References cited:
**DE-C- 625 540**
**DE-C- 955 368**
**JP-A-54 091 444**
**JP-U-55 056 570**
**US-A-2 777 253**
**US-A-3 925 928**
**US-A-4 205 656**

(73) Proprietor: **KUBOTA LTD.**
**2-47, Shikitsuhigashi 1-chome**
**Naniwa-ku Osaka 556 (JP)**

(72) Inventor: **Yano, Naomichi**
**Kubota Ltd. 2-47 Shikitsuhigashi 1-chome**
**Naniwa-ku Osaka-shi Osaka 556 (JP)**
Inventor: **Ito, Hajime**
**Kubota Ltd. 2-47 Shikitsuhigashi 1-chome**
**Naniwa-ku Osaka-shi Osaka 556 (JP)**

(74) Representative: **MacFarlane, John Anthony Christopher et al**
**HASELTINE LAKE & CO. Hazlitt House 28, Southampton Buildings Chancery Lane London WC2A 1AT (GB)**

Courier Press, Leamington Spa, England.

## Description

This invention relates to solar heat accumulating greenhouses.

Conventionally, in greenhouses such as shown in JP—A—54-91444, double roofs constructed with two glass panes, solar heat receiving panels arranged in the double roofs, a water storage tank storing hot water from the panels and an air conditioner using the hot water from the tank are provided. In another example as shown in JP—U—55-56570, a heat collector and a heat accumulating tank connected to the heat collector via a fan are provided, the tank having a large number of heat accumulating members comprising a heat conducting substance, and gaps between these heat accumulating members for passing air therebetween. The greenhouses of JP—A—54-91444 have the disadvantage that the double roof is necessary for arranging panels having wide heat receiving area near the roof of the greenhouse, and is thus costly to manufacture. In the greenhouses of both the Japanese documents only the air in the greenhouse is warmed, not the soil itself directly.

German Specification DE—C—625 540 discloses heating means (d) below the ground of a greenhouse, a cover of heat conducting material and a large number of cylindrical holes (b) extending through the cover and acting as air blast pipes. This prior art has the disadvantage that the soil and the water may fall on the heating means (d) through the holes (b) to cover the heating means (d) or the holes (b) may be clogged with the soil.

According to the present invention there is provided a solar heat accumulating greenhouse having a heat accumulating tank comprising a large number of heat accumulating members and gaps between these heat accumulating members for passing air therebetween, the heat accumulating tank having a cover member and being buried in the ground within the greenhouse, an air discharge pipe leading from the inside of the heat accumulating tank through the cover member into the lower portion of the greenhouse, and an air suction pipe leading from the upper portion of the interior of the greenhouse into the lower portion of the interior of the heat accumulating tank through the cover member and having an air circulating fan disposed therein; characterised in that the cover member is covered by plant culture soil, a large number of air blast pipes each being covered by a hood member extend upwardly through the cover member and therefrom into the plant culture soil to such an extent that the hood members are buried in the plant culture soil, each hood member having a plurality of through-holes directed in a horizontal direction, the cover member being provided with a plurality of water discharge grooves disposed between the air blast pipes, and the heat accumulating members each having a heat conducting body with a filling of latent heat accumulating substance. In this construction soil or water is prevented from entering the interior of the blast pipe and there is no possibility that water enters from the blast pipes into the heat accumulating tank. Thus the warm air easily enters into the soil. Such being the case, the hood members and the water discharge grooves have a remarkable effect on the culture plant, and heat from the heat accumulating tank is effectively utilized.

In this greenhouse, during sun shining hours in the day time, an extremely high heat collecting efficiency is achieved so as to accumulate extra heat, which may be discharged during night time or in rainy weather, and therefore, the temperature within the greenhouse can be maintained at a required level, without employment of other heating facilities and therefore avoiding fuel cost and thus contributing to energy saving and saving of expense. Particularly, since the plant culture soil is also heated simultaneously with the air within the greenhouse, growth of plants may be expedited still further as compared with greenhouses conventionally proposed.

For a better understanding of the invention and to show how the same may be carried into effect, reference will now be made, by way of example, to the accompanying drawings in which:—

Figure 1 is a front view, partly broken away, of a solar heat accumulating greenhouse, and

Figure 2 is a front view in section showing, on an enlarged scale, part of the greenhouse of Figure 1.

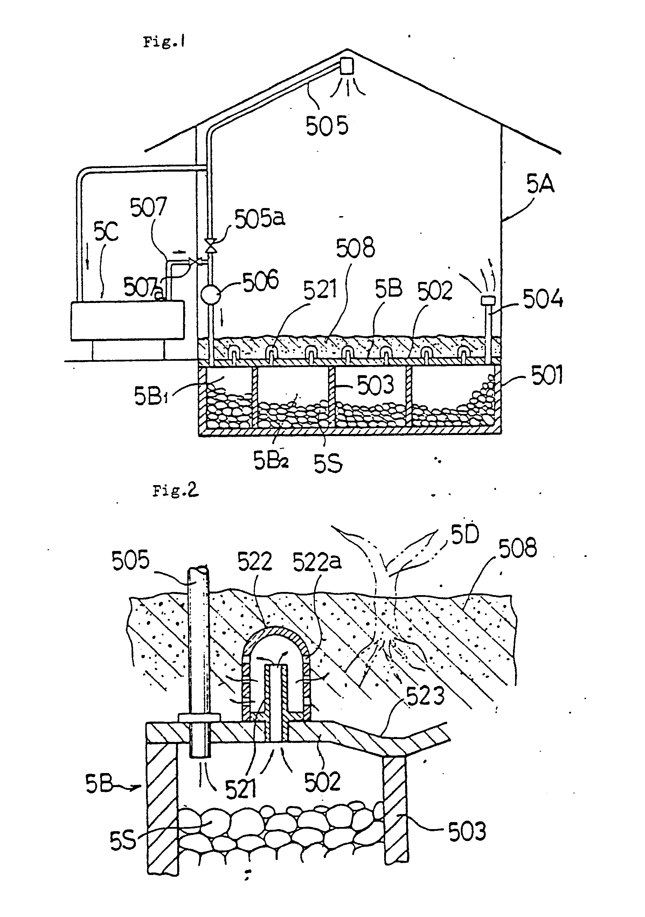

The greenhouse 5A has, buried in the ground within the greenhouse 5A, a latent heat accumulating tank 5B including a heat insulating box-like member 501 having a corrosion-resistance surface, and a cover member 502 made, for example, of a metallic material having superior corrosion resistance and heat conduction applied on the upper surface of the box-like member 501. The cover member 502 is provided with a large number of blast pipes 521 extending upwardly from the cover member 502, each of which blast pipes 521 is further covered by a hood member 522 having a plurality of through-holes 522a directed in a horizontal direction as is most clearly seen in Figure 2. The cover member 502 is provided with a plurality of shallow water discharge grooves 523 arranged in parallel relation to each other.

The interior of the latent heat accumulating tank 5B is partitioned into a plurality of sections $5B_1$, $5B_2$ . . ., and $5B_n$ by partition members 503 of a coarse mesh-like structure. In the latent heat accumulating tank 5B a large number of heat accumulating members 5S each being a capsule, for example, of a spherical shape or tetrapod-like configuration, or being a spherical container or capsule of any other desired shape, having a heat conducting body with a fill of latent heat accumulating substance, are accommodated under the state where a large amount of gaps are provided therebetween.

To the latent heat accumulating tank 5B an air discharge pipe 504 open at its top end in the lower portion in the greenhouse 5A and an air suction pipe 505 open at its top end in the upper central portion of the greenhouse are connected in a symmetrical relation with each other, each of these pipes 504, 505 being open at its bottom end in the inside of the tank 5B through the cover member 502. At the lower portion of the air suction pipe 505, that is intermediate its ends, there is provided an air circulating fan 506. At the south side outside the greenhouse, an air collector 5C made of glass or metallic material having sufficient solar heat absorbing ability and corrosion resistance is installed, and is connected, as a by-pass, to the upstream side suction pipe 505 along the air flow of the air circulating fan 506. In the course of the suction pipe 505 and an air collector lead-in pipe 507, air plugs 505a and 507a are respectively inserted for change-over of the air passage.

The upper portion of the latent heat accumulating tank 5B is covered by plant culture soil 508 to such an extent as the blast pipe hoods 522 are buried therein. For the culture soil provided around the blast pipe hoods 522, soil of coarse particles is particularly employed so that the soil may not enter the interior of the hoods via the through-holes 522a of the hoods 522. In the plant culture soil 508, plants 5D are raised.

By the above arrangement, during sun shining hours in the day time, heated air in the greenhouse is led into the air collector 5c through the suction pipe 505, and is further heated by the solar heat in the tank. The warm air is then drawn by the air circulating fan 506 into the latent heat accumulating tank 5B for heat accumulation in the heat accumulating substance 5S in the tank, and is blasted into the greenhouse through the air discharge pipe 504, with heat inertia still contained therein. Meanwhile, part of the warm air is pushed out of the blast pipes 521 for penetration into the culture soil so as to warm up side soil so as to expedite the growth of the plants.

During night time and rainy weather, the air valve 505a at the side of the suction pipe is opened, and the air valve 507a at the side of the air collector is closed as to form the air circulating system between the interior of the greenhouse and the latent heat accumulating tank 5b, and thus, the air within the greenhouse drawn in from the air suction pipe 505 is introduced into the latent heat accumulating tank 5B to be heated, in the tank, by receiving the heat radiating action of the heat accumulating members 5S, and is discharged into the greenhouse and the soil for heating in the similar manner as in the day time. The heat radiation into the culture soil 508 may also be effected through the heat conduction by the cover member 502.

The water discharge grooves 523 are arranged to collect surplus water for discharging it out of the greenhouse during irrigation. By the above arrangement, there is no possibility that water enters from the blast pipes 521 into the heat accumulating tank 5B and the warm air easily enters into the soil. Such being the case, the hood members 522 and the water discharge grooves 523 have a remarkable effect on the culture plant.

The fill of latent heat accumulating substance in the heat accumulating members 5S can be $CaCl_2 \cdot 6H_2O$; $Na_2SO_4 \cdot 10H_2O$; $Na_2SO_3 \cdot 5H_2O$; paraffin etc.

## Claim

A solar heat accumulating greenhouse having a heat accumulating tank (5B) comprising a large number of heat accumulating members (5S) and gaps between these heat accumulating members for passing air therebetween, the heat accumulating tank (5B) having a cover member (502) and being buried in the ground within the greenhouse, an air discharge pipe (504) leading from the inside of the heat accumulating tank (5B) through the cover member (502) into the lower portion of the greenhouse, and an air suction pipe (505) leading from the upper portion of the interior of the greenhouse into the lower portion of the interior of the heat accumulating tank (5B) through the cover member (502) and having an air circulating fan (506) disposed therein; characterised in that the cover member (502) is covered by plant culture soil (508), a large number of air blast pipes (521) each being covered by a hood member (522) extend upwardly through the cover member (502) and therefrom into the plant culture soil (508) to such an extent that the hood members (522) are buried in the plant culture soil (508), each hood member (522) having a plurality of through-holes (522a) directed in a horizontal direction, the cover member (502) being provided with a plurality of water discharge grooves (523) disposed between the air blast pipes (521), and the heat accumulating members (5S) each having a heat conducting body with a filling of latent heat accumulating substance.

## Patentanspruch

Mit Speicherung von Solarwärme arbeitendes Gewächshaus

mit einem Wärmespeichertank (5B) mit zahlreichen Wärmespeicherelementen (5S), zwischen denen Zwischenräume für den Luftdurchtritt vorgesehen sind, wobei der Wärmespeichertank (5B) eine Abdeckung (502) besitzt und in dem Boden innerhalb des Gewächshauses vergraben ist,

mit einem Luftauslaßrohr (504), das vom Innenraum des Wärmespeichertanks (5B) aus durch die Abdeckung (502) in den unteren Bereich des Gewächshauses führt,

sowie mit einem Luftansaugrohr (505), das vom oberen Bereich des Innenraums des Gewächshauses durch die Abdeckung (502) in den unteren Teil des Innenraums des Wärmespeichertanks (5B) führt und in dem ein Luftzirkulationsgebläse (506) angeordnet ist, dadurch gekennzeichnet,

daß die Abdeckung (502) mit Pflanzenerde (508) bedeckt ist,

daß eine große Zahl von Belüftungsrohren (521), die jeweils von einem Haubenelement (522) abgedeckt sind, nach oben durch die Abdeckung (502) und von dort soweit in die Pflanzenerde (508) ragen, daß die Haubenelemente (522) in der Pflanzenerde (508) vergraben sind,

daß jedes der Haubenelemente (522) mehrere horizontal verlaufende durchgehende Öffnungen (522a) bestizt,

daß die Abdeckung (502) eine Vielzahl von zwischen den Belüftungsrohren (521) angeordneten Entwässerungsrinnen (523) aufweist,

und daß die Wärmespeicherelemente (5S) jeweils einen wärmeleitenden Körper bestizen mit einer Füllung aus einer Substanz zur Speicherung latenter Wärme.

**Revendication**

Serre pour stocker la chaleur solaire comportant un réservoir (5B) d'accumulation de chaleur comprenant un grand nombre d'éléments d'accumulation de chaleur (5S) et des intervalles entre ces éléments d'accumulation de chaleur destinés à faire passer de l'air entre ces derniers, le réservoir d'accumulation de chaleur (5B) comportant un élément de couverture (502) et étant enterré dans le sol situé à l'intérieur de la serre, un tayau (504) d'évacuation d'air conduisant de l'intérieur du réservoir (5B) d'accumulation de chaleur à travers l'élément de couverture (502) jusque dans la partie inférieure de la serre et un tuyau (505) d'aspiration d'air conduisant de la partie supérieure de l'intérieur de la serre jusque dans la partie inférieure de l'intérieur du réservoir (5B) d'accumulation de chaleur, à travers l'élément de couverture (502) et comportant un ventilateur (506) de circulation d'air installé à l'intérieur; caractérisée en ce que l'élément de couverture (502) est recouvert par la terre (508) de culture des plantes, qu'un grand nombre de tuyaux (521) de soufflage d'air, chacun étant couvert par un élément (522) formant un chapeau, s'étendent vers le haut à travers l'élément (502) de couverture et de là dans la tette (508) de culture des plantes, avec une extension telle que les éléments (522) formant un chapeau sont enterrés dans la terre (508) de culture des plantes, chaque élément (522) formant un chapeau comportant une pluralité de trous débouchants (522a) dirigés horizontalement, l'élément (502) de couverture étant muni d'une pluralité de gorges (523) d'évacuation d'eau, disposées entre les tuyaux (521) de soufflage d'air, et les éléments d'accumulation de chaleur (5S) comportant chacun un corps conducteur de la chaleur rempli d'une matière d'accumulation de chaleur latente.

0 121 668

Fig.1

5A
507
5C
505a
508
5B
502
507a
506
521
504
501
5B₁
503
5B₂ 5S

Fig.2

505
522 522a
5D
508
523
5B
521 502
5S
503

1